# EUROPÄISCHE PATENTSCHRIFT

(11) **EP 3 628 471 B1**
(45) Veröffentlichungstag und Bekanntmachung des Hinweises auf die Patenterteilung: **18.09.2024**
(21) Anmeldenummer: 19199491.2
(22) Anmeldetag: 25.09.2019
(51) Int. Cl.: B29C 64/106, B29C 64/209, B29C 70/38, B33Y 30/00

(54) **ANLAGE UND VERFAHREN ZUM HERSTELLEN VON DREIDIMENSIONALEN STRUKTUREN**
SYSTEM AND METHOD FOR PRODUCING THREE-DIMENSIONAL STRUCTURES
INSTALLATION ET PROCÉDÉ DE FABRICATION DE STRUCTURES TRIDIMENSIONNELLES

(30) Priorität: 25.09.2018 DE 102018123525
(43) Veröffentlichungstag der Anmeldung: 01.04.2020
(73) Patentinhaber: Deutsches Zentrum für Luft- und Raumfahrt e.V., 51147 Köln (DE)
(72) Erfinder: KLETZ, Björn Timo, 38106 Braunschweig (DE); TITZE, Maik, 30419 Hannover (DE)
(74) Vertreter: Gramm, Lins & Partner Patent- und Rechtsanwälte PartGmbB

(56) Entgegenhaltungen:
- US-A1- 2014 361 460
- US-A1- 2015 367 576
- US-A1- 2018 036 946

## Beschreibung

Die Erfindung betrifft eine Anlage zum Herstellen von dreidimensionalen Strukturen, die zwei oder mehr unterschiedliche Werkstoffe enthalten, wobei die dreidimensionale Struktur mithilfe eines 3D-Druckkopfes hergestellt werden soll. Die Erfindung betrifft ebenso ein Verfahren zum Herstellen einer solchen dreidimensionalen Struktur mithilfe einer derartigen Anlage.

Mithilfe von generativen Verfahren lassen sich unter der Verwendung eines entsprechenden Werkstoffes Bauteile mit einer fast beliebigen Form herstellen. Der 3D-Druck mithilfe eines 3D-Druckers stellt dabei einen sehr bekannten Vertreter der generativen Fertigungsverfahren dar. Dabei wird mithilfe eines 3D-Druckes schichtweise ein schmelzbarer Werkstoff, beispielweise ein thermoplastischer Kunststoff, aus einem 3D-Druckkopf extrudiert, wodurch sich am Ende des Verfahrens ein dreidimensionales Bauteil bzw. eine dreidimensionale Struktur ergibt.

Die Steifigkeit und Festigkeit eines auf dieser Basis hergestellten Bauteils hängt dabei signifikant von den entsprechenden Materialeigenschaften des verwendeten schmelzbaren Werkstoffes ab. Vor allem mit Blick auf den Leichtbau ist es dabei oftmals wünschenswert, dass die Bauteile aus Faserverbundwerkstoffen hergestellt werden, um eine hohe gewichtsspezifische Festigkeit und Steifigkeit zu erlangen. Allerdings weisen Faserverbundwerkstoffe anisotrope Werkstoffeigenschaften auf, so dass Festigkeit und Steifigkeit richtungsabhängig sind und somit abhängig sind von dem Faserverlauf. Daher werden oftmals mehrere Lagen Fasermaterial mit unterschiedlichen Faserorientierungen angeordnet, um so zumindest teilweise die homogenen Werkstoffeigenschaften von Metallen nachzubilden.

Eine solche, insbesondere bedarfsweise Integration von Fasermaterial in den 3D-Druck hätte dabei den entscheidenden Vorteil, dass Bauteile und Strukturen hergestellt werden können, deren Lastpfade exakt an die Bedingungen angepasst sind, ohne dabei unnötigerweise Fasermaterial zu benötigen.

Aus Hauke Prüß, Thomas Vietor: "Neue Gestaltungsfreiheiten durch 3D-gedruckte Faser-Kunststoff-Verbunde", Forum für Rapid Technologie, Ausgabe 12/2015, ist ein 3D-Druckkopf bekannt, dem ein quasiendloses Fasermaterial zugeführt wird. Des Weiteren wird dem 3D-Druckkopf mithilfe zweier Zuführkanäle ein Kunststoffmaterial zugeführt, wobei Fasermaterial und Kunststoffmaterial in einer gemeinsamen Mischkammer münden, wodurch das hindurchführende Fasermaterial von dem Kunststoffmaterial benetzt und in dieser Form ausgegeben wird. Hierdurch lassen sich nahezu beliebige Strukturen mit integrierten Lastpfaden entwickeln.

Eine ähnliche Anlage und ein ähnliches Verfahren ist auch aus der nachveröffentlichten DE 10 2017 124 352 A1 bekannt, wo ein 3D-Druckkopf vorgeschlagen wird, der neben der Zuführung eines quasiendlosen Fasermaterials mindestens drei Zuführkanäle für ein thermoplastisches Matrixmaterial aufweist.

Aus der nachveröffentlichten DE 10 2017 124 353 A1 ist ebenfalls eine Anlage zum Herstellen dreidimensionaler Strukturen bekannt, wobei auch hier ein 3D-Druckkopf verwendet wird, dem ein quasiendloses Fasermaterial sowie ein thermoplastisches Matrixmaterial zugeführt wird, um sie in einer gemeinsamen Mischkammer zu vermischen. Um zu verhindern, dass Matrixmaterial aus der Mischkammer in den Zuführkanal für das Fasermaterial aufsteigt, ist vorgesehen, dass der 3D-Druckkopf an der Materialzuführung für das Fasermaterial mit einer Druckquelle verbunden wird, so dass über den Überdruck verhindert wird, dass das Matrixmaterial in den Zuführkanal aufsteigen kann.

Die US 2015/0367576 A1 offenbart ein Verfahren für Fused Deposition Modeling, in welchem ein Matrixmaterial und ein Fasermaterial bereitgestellt und einem 3D-Drucckopf getrennt voneinander zugeführt werden. An einer Druckposition wird das Matrixmaterial wird aufgeschmolzen und das Fasermaterial in dieses eingebettet. Des Weiteren ist eine Anlage offenbart, in der Matrixmaterial und Fasermaterial getrennt voneinander in nicht-planaren Schichten abgelegt werden, um ein Bauteil zu erzeugen.

Die vorbezeichneten 3D-Druckanlagen sowie die 3D-Druckköpfe weisen hierbei jedoch den Nachteil auf, dass die Extrusionsrichtung, d.h. diejenige Richtung, mit der die Materialmischung aus Fasermaterial und Matrixmaterial aus dem 3D-Druckkopf herausgedrückt wird, in Bezug zu der Substratoberfläche im Wesentlichen orthogonal ausgerichtet ist, so dass der kontinuierliche Materialstrom aus Fasermaterial und Matrixmaterial kurz nach dem Verlassen der Extrusionsöffnung des 3D-Druckkopfes in einem 90° Winkel umgelenkt wird, damit die Materialmischung auf der Substratoberfläche abgelegt werden kann. Es hat sich jedoch gezeigt, dass diese Art der Materialextrusion sich bei größeren Verfahrgeschwindigkeiten des 3D-Druckkopfes negativ auf die Qualität der Materialmischung auswirken kann, insbesondere auf die Eigenschaft des Fasermaterials. Denn bei einer Extrusion senkrecht zur Verfahrrichtung bzw. senkrecht zur Substratoberfläche kann es bei höheren Verfahrgeschwindigkeiten passieren, dass es zu einem Abrieb von Matrixmaterial am Umlenkpunkt kommt, wodurch die Gefahr besteht, dass Fasermaterial freigelegt wird. Außerdem besteht die Gefahr, dass aufgrund der wirkenden Kräfte das Fasermaterial beschädigt oder gar abgerissen wird, was zu einer Unterbrechung der Lastpfade innerhalb der dreidimensionalen Struktur führen kann. Des Weiteren besteht die Gefahr, dass das Fasermaterial aufgrund der noch nicht ausreichenden Abkühlung des thermoplastischen Matrixmaterials nach dem Austritt aus dem 3D-Kopf nach oben herausgezogen werden kann, wodurch sich ebenfalls eine negative Bauteileigenschaft einstellen kann.

Es ist daher Aufgabe der vorliegenden Erfindung eine verbesserte Anlage sowie ein verbessertes Verfahren anzugeben, mit dem sich derartige Beschädigungen des Fasermaterials sowie in der hergestellten dreidimensionalen Struktur vermeiden bzw. verringern, bei Bedarf jedoch auch gezielt herbeiführen lassen.

Die Aufgabe wird mit der Anlage gemäß Anspruch 1 sowie dem Verfahren gemäß Anspruch 7 erfindungsgemäß gelöst.

Gemäß Anspruch 1 wird eine Anlage zum Herstellen von dreidimensionalen Strukturen vorgeschlagen, die zwei oder mehr unterschiedliche Werkstoffe aufweisen. Die Anlage hat einen 3D-Druckkopf, der eine erste Materialzuführung zum Zuführen eines quasiendlosen Fasermaterials und wenigstens eine zweite Materialzuführung zum Zuführen eines Matrixmaterials, beispielsweise eines thermoplastischen Matrixmaterials, hat. Sowohl die erste Materialzuführung als auch die zweite Materialzuführung münden mit ihren jeweiligen Zuführkanälen in einer gemeinsamen Mischkammer, in der dann das quasiendlose Fasermaterial mit dem Matrixmaterial benetzt und somit die Materialmischung gebildet wird. Von der Mischkammer in Richtung einer Extrusionsöffnung des 3D-Druckkopfes erstreckt sich ein Extrusionskanal, durch den die Materialmischung in eine Extrusionsrichtung von der Mischkammer zur Extrusionsöffnung transportiert wird, um die Materialmischung auf die Extrusionsöffnung zum Herstellen der dreidimensionalen Struktur auszugeben.

Des Weiteren weist die Anlage einen Bewegungsautomaten auf, an dem als Endeffektor der vorbezeichnete 3D-Druckkopf angeordnet ist, so dass dieser im Raum frei bewegbar ist. Mithilfe des Bewegungsautomaten wird es dabei möglich, den 3D-Druckkopf in eine bestimmte Verfahrrichtung zu bewegen, wobei die Verfahrbewegung des 3D-Druckkopfes initiiert durch den Bewegungsautomaten eine translatorische und/oder rotatorische Bewegung sein kann.

Erfindungsgemäß ist die Anlage nun derart ausgebildet, dass während des Extrudierens der Materialmischung durch den 3D-Druckkopf ein Extrusionswinkel zwischen der Extrusionsrichtung in dem Extrusionskanal des 3D-Druckkopfes und der Substratebene bzw. Substratoberfläche eingestellt und/oder einstellbar ist, der kleiner als 90° bezogen auf die Verfahrrichtung des 3D-Druckkopfes ist. Dies kann durch bauliche Maßnahme des 3D-Druckkopfes oder durch eine entsprechende Ansteuerung des 3D-Druckkopfes beim Verfahren geschehen.

Hierdurch wird es möglich, dass die Materialmischung nicht mehr unter dem zwingenden Extrusionswinkel von 90° auf die Substratoberfläche abgelegt wird, sondern dass der Extrusionswinkel kleiner als 90° ist, beispielsweise 45°, wodurch die Gefahr von Beschädigungen der Fasern der Materialmischung sowie ein Abreißen der Fasern auch bei hohen Verfahrgeschwindigkeiten deutlich reduziert wird.

Unter einem Winkel < 90° wird insbesondere ein Winkel verstanden, der von einer senkrechten Extrusionsrichtung bezogen auf die Substratoberfläche abzüglich etwaiger Fehlertoleranzen abweicht. Insbesondere ab einem absoluten Winkel von 85° und kleiner kann hier von einem Winkel < 90° innerhalb der Fehlertoleranz gesprochen werden. Es hat sich bevorzugter Weise herausgestellt, dass ein Extrusionswinkel zwischen 40° und 50° sowohl die Gefahr von Beschädigungen des Fasermaterials der Materialmischung deutlich reduziert, ohne dabei den Druckprozess zu verkomplizieren bzw. zu beschränken.

Die Erfinder haben dabei erkannt, dass durch die Verringerung des Extrusionswinkels die Gefahr von Beschädigungen des Fasermaterials beim Extrudieren gerade bei hohen Geschwindigkeiten reduziert wird, wodurch die Bauteilqualität insgesamt verbessert werden kann, ohne dass durch die Verringerung des Extrusionswinkels der gesamte Druckprozess negativ beeinflusst wird.

Das dem 3D-Druckkopf zugeführte Matrixmaterial, das bevorzugter Weise ein thermoplastisches Kunststoffmaterial sein kann, wird durch den 3D-Druckkopf und einer an dem 3D-Druckkopf angeordneten Temperiereinrichtung temperiert, um es so auf eine schmelz- bzw. fließfähige Temperatur zu bringen. Das thermoplastische Kunststoffmaterial kann dabei in der Regel im festen Aggregatzustand dem 3D-Druckkopf zugeführt werden, wobei mithilfe der Temperiereinrichtung dann das Kunststoffmaterial auf eine Temperatur gebracht wird, in der es schmilzt und somit innerhalb des Mischkopfes zusammen mit dem Fasermaterial die Materialmischung bilden kann. Bevorzugter Weise ist die Temperiereinrichtung so angeordnet, dass der gesamte Mischkopf entsprechend temperiert wird.

In einer weiteren vorteilhaften Ausführungsform weist die zweite Materialzuführung zwei, drei oder mehr Zuführkanäle auf, die um einen axialen Verlauf des Zuführkanals der ersten Materialzuführung zum Zuführen des Fasermaterials herum angeordnet sind und alle in der Mischkammer münden. Hierdurch kann sichergestellt werden, dass die Abstände zwischen zwei benachbarten Zuführkanälen für das Matrixmaterial nicht allzu groß sind, wodurch in der Mischkammer ein homogenes Vermischen mit dem Fasermaterial realisiert werden kann.

In einer Ausführungsform ist der Extrusionskanal des 3D-Druckkopfes bogenförmig vorgesehen, so dass der Extrusionskanal keinen gradlinigen Verlauf nimmt, sondern einen bogenförmigen Verlauf entgegen der Verfahrrichtung des 3D-Druckkopfes. Der bogenförmige Verlauf des Extrusionskanals bildet dabei einen Kreisbogenabschnitt mit einem Radius, wodurch das Materialgemisch aufgrund des größeren Radius gegenüber einer herkömmlichen senkrechten Extrusion schonend umgelenkt wird. Diese Ausführungsform hat den Vorteil, dass der 3D-Druckkopf weiterhin senkrecht gegenüber der Substratoberfläche verfahren werden kann, während das Materialgemisch je nach Winkel des Kreisbogenabschnittes fast parallel auf die Substratoberfläche trifft.

In einer anderen Ausführungsform weist die erste Materialzuführung für die Zuführung des Fasermaterials einen Zuführkanal auf, der in der Mischkammer des 3D-Druckkopfes mündet und axial zu dem Extrusionskanal und der Extrusionsöffnung derart angeordnet ist, dass das quasi endlose Fasermaterial von dem Zuführkanal der ersten Materialzuführung durch die Mischkammer in den Extrusionskanal und der Extrusionsöffnung hindurchführbar ist, wobei während des Extrudierens der Materialmischung der axiale Verlauf des Extrusionskanals in Verfahrrichtung des 3D-Drucckopfes einem Winkel kleiner 90 Grad entspricht. Bei dieser Ausführungsform wird bei einem gradlinigen Verlauf des Extrusionskanals sichergestellt, dass das Materialgemisch aus dem Extrusionskanal unter einem Winkel kleiner 90 Grad auf die Substratoberfläche aufgetragen wird, um ein starkes Abknicken des zu extrudierenden Materialgemisches zu vermeiden.

Dabei haben sich Extrusionswinkel, d.h. ein Winkel zwischen der Substratoberfläche und dem axialen Verlauf des Extrusionskanals, zwischen 40 Grad und 50 Grad (vorzugsweise 45 Grad) als optimal erwiesen im Hinblick auf die reduzierte Gefahr von Beschädigung des Fasermaterials und Prozesstauglichkeit. Ein solcher Winkel kann beispielsweise dadurch eingestellt werden, dass der 3D-Druckkopf fest an dem Bewegungsautomaten und an dem vorgegebenen Winkel angeordnet wird. Denkbar ist aber auch, dass mittels einer Steuereinheit der Bewegungsautomat entsprechend angesteuert wird, und zwar derart, dass der 3D-Druckkopf gegenüber der Substratoberfläche eine relative Position so einnimmt, dass der Extrusionswinkel kleiner als 90 Grad ist.

Erfindungsgemäß ist vorgesehen, dass die Steuerungseinheit zur Ansteuerung des Bewegungsautomaten zur Steuerung der Bewegung des 3D-Druckkopfes mittels des Bewegungsautomaten so eingerichtet ist, dass am Ende einer durch die Extrusion einer Materialmischung gebildete Teilstruktur der dreidimensionalen Struktur der 3D-Druckkopf mittels des Bewegungsautomaten entgegen einer Verfahrrichtung des 3D-Druckkopfes geneigt wird, sodass ein Extrusionswinkel in Verfahrrichtung größer als 90 Grad eingestellt wird. Hierdurch wird am Ende der gedruckten Teilstruktur bewusst ein Extrusionswinkel eingestellt, der mit an Sicherheit grenzender Wahrscheinlichkeit zu einem Abriss der Fasern führt, sodass im gesamten 3D-Druckkopf auf eine Schneidvorrichtung zum Schneiden des Fasermaterials verzichtet werden kann. Demzufolge ist es vorteilhaft, wenn der 3D-Druckkopf keine Schneidvorrichtung zum Durchtrennen des Fasermaterials aufweist.

Die Erfinder haben hierbei erkannt, dass bei einem Extrusionswinkel von mehr als 90 Grad, beispielsweise mehr als 100 Grad oder 110 Grad, vorzugsweise 125 Grad, das Fasermaterial derart beschädigt wird, dass es nicht mehr mit Hilfe einer Schneidvorrichtung durchtrennt werden muss.

Das Durchtrennen kann dabei nun auch durch ein Drehen des 3D-Druckkopfes um die eigene Achse unterstützt werden, was durch eine entsprechende Ansteuerung des Bewegungsautomaten rezensiert werden kann.

Der 3D-Druckkopf weist im Extrusionskanal mindestens eine radial nach innen abstehende Abreißkante auf, die mit der Materialmischung bei einem eingestellten Extrusionswinkel größer 90 Grad zum kontrollierten Abreißen des Fasermaterials der Materialmischung zusammenwirkt. Diese Abreißkante ist im Extrusionskanal dabei so vorgesehen, dass sie mit der Materialmischung erst dann entsprechend zusammenwirkt, wenn der Extrusionswinkel über 90 Grad eingestellt ist.

Die Aufgabe wird im Übrigen auch mit dem Verfahren zum Herstellen von dreidimensionalen Strukturen gemäß Anspruch 7 erfindungsgemäß gelöst, wobei das Verfahren die Schritte umfasst:
- Bereitstellen einer Anlage zum Herstellen einer dreidimensionalen Struktur wie vorstehend beschrieben;
- Zuführen von quasi endlosem Fasermaterial und Matrixmaterial zu dem 3D-Druckkopf der Anlage; und
- Extrudieren der durch den 3D-Druckkopf gebildeten Materialmischung zur Bildung der dreidimensionalen Struktur;
- wobei während des Extrudierens der Materialmischung durch den 3D-Drucckopf ein Extrusionswinkel zwischen der Extrusionsrichtung in dem Extrusionskanal des 3D-Druckkopfes und der Substratebene von weniger als 90 Grad in Verfahrrichtung des 3D-Druckkopfes eingestellt wird.

Vorteilhafte Ausgestaltungen des Verfahrens finden sich in den entsprechenden Unteransprüchen.

Die Erfindung wird anhand der beigefügten Figuren beispielhaft erläutert. Es zeigen:
- Figur 1 -: Schematische Darstellung eines 3D-Druckes wie aus dem Stand der Technik bekannt;
- Figur 2 -: Schematische Darstellung des 3D-Druckes gemäß der vorliegenden Erfindung in einer ersten Ausführungsform;
- Figur 3 -: Schematische Darstellung eines 3D-Druckes gemäß der vorliegenden Erfindung in einer zweiten Ausführungsform.

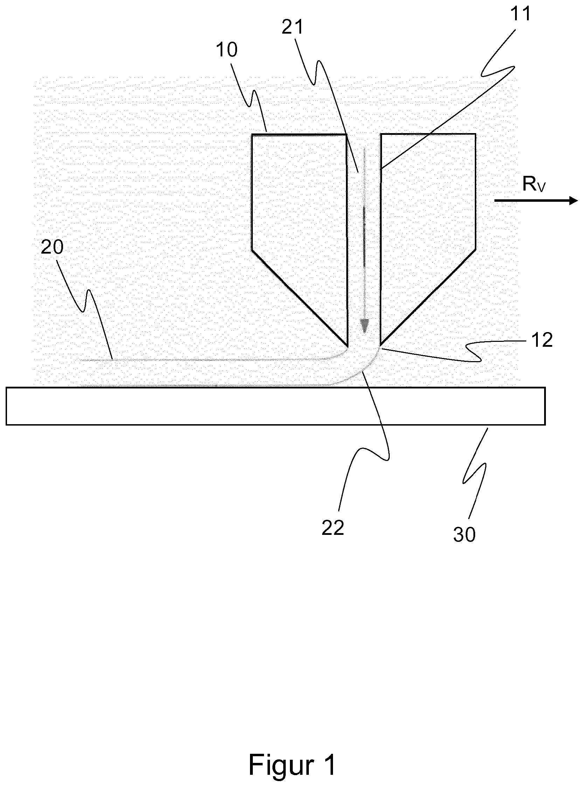

Figur 1 zeigt in einer stark vereinfachten Darstellung einen 3D-Druckkopf 10 einer 3D-Druckanlage 1, zu der ein nicht dargestellter Bewegungsautomat gehört. Der 3D-Druckkopf 10 ist dabei als Endeffektor an dem Bewegungsautomaten angeordnet und kann hierdurch im Raum frei bewegt werden.

Der 3D-Druckkopf 10 kann demzufolge mit Hilfe des nicht dargestellten Bewegungsautomaten der Druckanlage 1 in eine Verfahrrichtung Rᵥ bewegt werden, um so Teilstrukturen 20 der Materialmischung aus Fasermaterial und Matrixmaterial auf einer Grundstruktur bzw. einer Substratoberfläche 30 kontinuierlich drucken zu können.

Der 3D-Druckkopf 10 weist einen Extrusionskanal 11 auf, der von der Mischkammer (nicht dargestellt) sich in Richtung einer Extrusionsöffnung 12 erstreckt, sodass das Materialgemisch 21 durch den Extrusionskanal 11 zu der Extrusionsöffnung 12 transportiert und dann ausgegeben wird.

Wie in Figur 1 dargestellt, wird im Stand der Technik der Druckkopf 10 so ausgerichtet, dass die durch den Extrusionskanal 11 vorgegebene Extrusionsrichtung des Materialgemischs 21 in dem Extrusionskanal 11 im Wesentlichen senkrecht zu der Substratoberfläche 30 in Verfahrrichtung Rᵥ des 3D-Druckkopfes 10 steht. Hierdurch wird kurz hinter der Extrusionsöffnung 12 das Materialgemisch 21 in einem Biegeabschnitt 22 in einem sehr kleinen Radius um 90 Grad umgelenkt, was bei hohen Verfahrgeschwindigkeiten des 3D-Druckkopfes 10 zu Beschädigungen des Fasermaterials führen kann.

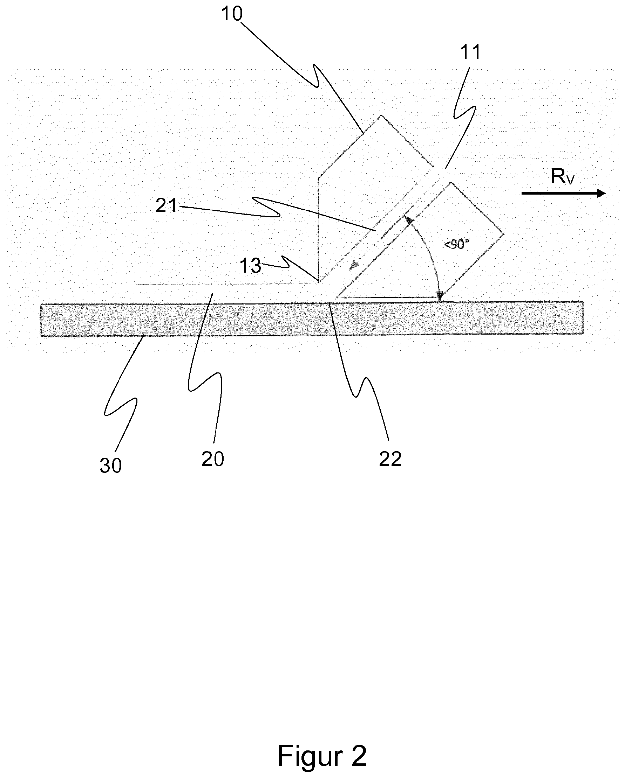

Hierfür schlägt die vorliegende Erfindung wie in Figur 2 gezeigt in einer Ausführungsform vor, dass der 3D-Druckkopf 10 so gegenüber der Substratoberfläche 30 ausgerichtet wird, dass die durch den Extrusionskanal 11 vorgegebene Extrusionsrichtung gegenüber der Substratoberfläche 30 in Verfahrrichtung Rᵥ einen Winkel (Extrusionswinkel) aufweist, der kleiner als 90 Grad ist. Im Ausführungsbeispiel der Figur 2 weist der Extrusionswinkel 45 Grad auf.

Hierdurch kann erreicht werden, dass im Biegeabschnitt 22 die Materialmischung 21 nicht mehr wie aus dem Stand der Technik bekannt in einem engen Radius um 90 Grad abgewinkelt wird, sondern lediglich um den Extrusionswinkel, der im Falle der Figur 2 45 Grad beträgt. Hierdurch kann auch bei schnellen Verfahrgeschwindigkeiten des 3D-Druckkopfes verhindert werden, dass das Fasermaterial beschädigt wird oder reißt.

Hierbei kann eine Abrisskante 13 am Ende des Extrusionskanals vorgesehen sein, um ein sauberes Durchtrennen der Fasern am Ende der gelegten Teilstruktur 20 zu erreichen. Hierfür wird der 3D-Druckkopf entgegen der Verfahrrichtung Rᵥ gedreht, sodass sich ein Extrusionswinkel von mehr als 90 Grad einstellt. Durch die Abrisskante 13 kann nun ein Durchtrennen der Fasern ermöglicht werden.

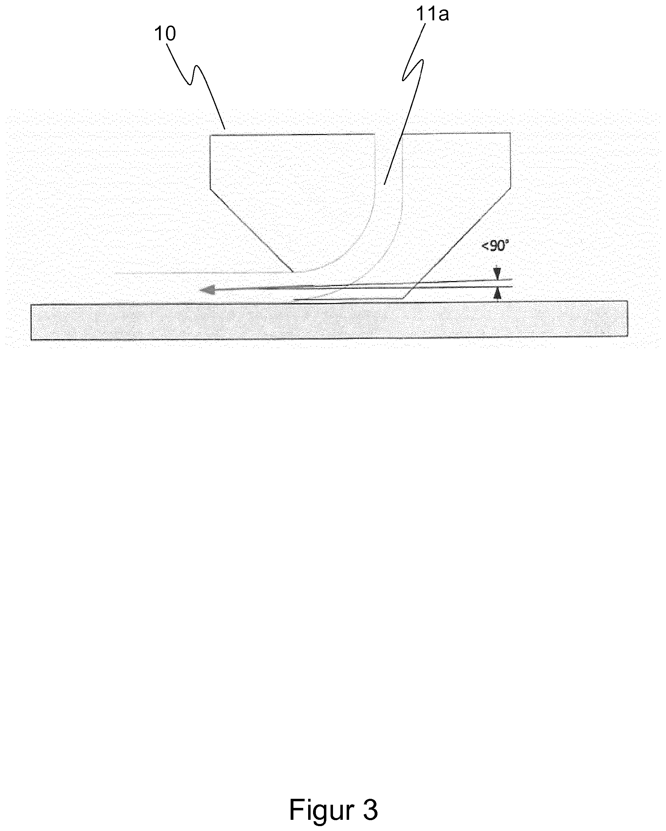

Figur 3 zeigt eine Ausführungsform, bei dem der 3D-Druckkopf 10 einen bogenförmigen Extrusionskanal 11a aufweist, sodass auch hier das Materialgemisch 21 einen möglichst geringen Extrusionswinkel erhält. Dies erfordert eine Anpassung der Druckkopfgeometrie, sodass das extrudierte Materialgemisch im Druckkopf so umgelenkt wird, dass die Verfahrrichtung des Druckkopfes senkrecht gegenüber der Substratoberfläche 30 verbleibt, zwischen Extrusionsrichtung und Bauteil sich jedoch ein Winkel von kleiner als 90 Grad einstellt. Vorteilhafterweise ist hier vorgesehen, dass der Extrusionswinkel am Ende des Extrusionskanals, d.h. an der Extrusionsöffnung gegenüber der Substratoberfläche doch nicht null ist, sondern größer als null, um so das sichere Ablegen der Materialmischung auf der Substratoberfläche zu gewährleisten.

### Bezugszeichenliste:

- 1 -: Anlage
- 10 -: 3D-Druckkopf
- 11 -: Extrusionskanal
- 11a -: bogenförmiger Extrusionskanal
- 12 -: Extrusionsöffnung
- 13 -: Abrisskante
- 20 -: Teilstruktur
- 21 -: Materialgemisch
- 22 -: Biegeabschnitt
- 30 -: Substratoberfläche
- Rᵥ -: Verfahrrichtung

## Patentansprüche

1. Anlage (1) zum Herstellen von dreidimensionalen Strukturen, die zwei oder mehr unterschiedliche Werkstoffe enthalten, mit einem 3D-Druckkopf (10), der eine erste Materialzuführung zum Zuführen eines quasiendlosen Fasermaterials und wenigstens eine zweite Materialzuführung zum Zuführen eines Matrixmaterials hat, die in einer gemeinsamen Mischkammer des 3D-Druckkopfes (10) münden, wobei die Mischkammer zum Bilden einer Materialmischung aus dem Fasermaterial und dem Matrixmaterial ausgebildet ist, und wobei sich von der Mischkammer in Richtung einer Extrusionsöffnung (12) ein Extrusionskanal erstreckt, durch den die Materialmischung in eine Extrusionsrichtung von der Mischkammer zur Extrusionsöffnung (12) transportiert wird, um die Materialmischung aus der Extrusionsöffnung (12) zum Herstellen der dreidimensionalen Struktur auszugeben, und mit einem Bewegungsautomaten, an dem als Endeffektor der 3D-Druckkopf (10) angeordnet ist und der zum Bewegen des 3D-Druckkopfes (10) in eine Verfahrrichtung (Rᵥ) ausgebildet ist, wobei die Anlage (1) derart ausgebildet ist, dass während des Extrudierens der Materialmischung durch den 3D-Druckkopf (10) ein Extrusionswinkel zwischen der Extrusionsrichtung in dem Extrusionskanal des 3D-Druckkopfes (10) und der Substratebene kleiner 90° in Verfahrrichtung (Rᵥ) des 3D-Drucckopfes (10) eingestellt und/oder einstellbar ist, wobei die Anlage (1) eine Steuerungseinheit zur Ansteuerung des Bewegungsautomaten zur Steuerung der Bewegung des 3D-Druckkopfes (10) während der Herstellung der dreidimensionalen Struktur hat, **dadurch gekennzeichnet, dass**
die Steuerungseinheit eingerichtet ist, am Ende einer
durch die Extrusion einer Materialmischung gebildeten Teilstruktur (20) der dreidimensionalen Struktur den 3D-Druckkopf (10) mittels des Bewegungsautomaten entgegen einer Verfahrrichtung (Rᵥ) des 3D-Druckkopfes (10) derart zu neigen, dass ein Extrusionswinkel größer 90° eingestellt wird und dass im Extrusionskanal (11) mindestens eine radial nach innen abstehende Abreißkante derart vorgesehen ist, dass diese mit der Materialmischung bei einem eingestellten Extrusionswinkel größer 90° zum kontrollierten Abreißen des Fasermaterials der Materialmischung zusammenwirkt.

2. Anlage (1) nach Anspruch 1, **dadurch gekennzeichnet, dass** der 3D-Druckkopf (10) eine Temperiereinrichtung hat, die zum Temperieren des dem 3D-Drucckopf (10) zugeführten Matrixmaterials ausgebildet ist.

3. Anlage (1) nach Anspruch 1 oder 2, **dadurch gekennzeichnet, dass** die zweite Materialzuführung zwei, drei oder mehr Zuführkanäle aufweist, die um einen axialen Verlauf des Zuführkanals der ersten Materialzuführung herum angeordnet sind und in der Mischkammer münden.

4. Anlage (1) nach einem der Ansprüche 1 bis 3, **dadurch gekennzeichnet, dass** der Extrusionskanal (11) des 3D-Druckkopfes (10) einen bogenförmigen Verlauf entgegen der Verfahrrichtung (Rᵥ) des 3D-Druckkopfes (10) hat.

5. Anlage (1) nach einem der Ansprüche 1 bis 3, **dadurch gekennzeichnet, dass** die erste Materialzuführung einen Zuführkanal hat, der in der Mischkammer des 3D-Druckkopfes (10) mündest und axial zu dem Extrusionskanal (11) und der Extrusionsöffnung (12) derart angeordnet ist, dass das quasiendlose Fasermaterial von dem Zuführkanal der ersten Materialzuführung durch die Mischkammer in den Extrusionskanal (11) und der Extrusionsöffnung (12) hindurchführbar ist, wobei während des Extrudierens der Materialmischung der axiale Verlauf des Extrusionskanals (11) in Verfahrrichtung (Rᵥ) des 3D-Druckkopfes (10) einen Winkel kleiner 90° entspricht.

6. Anlage (1) nacheinem der vorhergehenden Ansprüche, **dadurch gekennzeichnet, dass** die Steuerungseinheit eingerichtet ist, bei einem eingestellten Extrusionswinkel größer 90° den 3D-Druckkopf (10) um die eigene Achse zu drehen.

7. Verfahren zum Herstellen von dreidimensionalen Strukturen, die zwei oder mehr unterschiedliche Werkstoffe enthalten, mit den Schritten:
- Bereitstellen einer Anlage (1) zum Herstellen einer dreidimensionalen Struktur nach einem der vorhergehenden Ansprüche;
- Zuführen von quasiendlosem Fasermaterial und Matrixmaterial zu dem 3D-Druckkopf (10) der Anlage (1); und
- Extrudieren der durch den 3D-Druckkopf (10) gebildeten Materialmischung zur Bildung der dreidimensionalen Struktur;
wobei
- während des Extrudierens der Materialmischung durch den 3D-Druckkopf (10) ein Extrusionswinkel zwischen der Extrusionsrichtung in dem Extrusionskanal (11) des 3D-Druckkopfes (10) und der Substratebene von weniger als 90° in Verfahrrichtung (Rᵥ) des 3D-Druckkopfes (10) eingestellt wird, und
- wobei am Ende einer durch die Extrusion der Materialmischung gebildeten Teilstruktur (20) der dreidimensionalen Struktur der 3D-Druckkopf (10) mittels des Bewegungsautomaten entgegen der Verfahrrichtung (Rᵥ) des 3D-Druckkopfes (10) derart geneigt wird, dass ein Extrusionswinkel größer 90° eingestellt wird, der zu einem Abriss des Fasermaterials führt.

8. Verfahren nach Anspruch 7, wobei der Extrusionswinkel während des Extrudierens der Materialmischung variiert wird.

9. Verfahren nach Anspruch 7 oder 8, wobei bei einem Extrusionswinkel größer 90° der 3D-Druckkopf (10) um die eigene Achse gedreht wird.

10. Verfahren nacheinem der Ansprüche 7 bis 9, wobei die Materialmischung bei einem Extrusionswinkel größer 90° mit mindestens einer im Extrusionskanal (11) radial nach innen abstehenden Abreißkante zum kontrollierten Abreißen des Fasermaterials der Materialmischung zusammenwirkt.

## Claims

1. System (1) for producing three-dimensional structures which contain two or more different materials, having a 3D print head (10) which has a first material feed for feeding a quasi-endless fiber material and at least one second material feed for feeding a matrix material, which open into a common mixing chamber of the 3D print head (10), the mixing chamber being designed to form a material mixture of the fiber material and the matrix material, and wherein an extrusion channel extends from the mixing chamber in the direction of an extrusion opening (12), through which the material mixture is transported in an extrusion direction from the mixing chamber to the extrusion opening (12), in order to print the material mixture from the extrusion opening (12) for producing the three-dimensional structure, and with an automatic movement device, on which the 3D print head (10) is arranged as an end effector and which is designed to move the 3D print head (10) in a moving direction (Rᵥ), the system (1) being designed in such a way that during the extrusion of the material mixture by the 3D print head (10), an extrusion angle between the extrusion direction in the extrusion channel of the 3D print head (10) and the substrate plane is set and/or adjustable to less than 90° in the direction of travel (Rᵥ) of the 3D print head (10), the system (1) having a control unit for controlling the automatic movement machine for controlling the movement of the 3D print head (10) during the production of the three-dimensional structure, **characterized in that** the control unit is set up at the end of a partial structure (20) of the three-dimensional structure formed by the extrusion of a material mixture, to incline the 3D print head (10) by means of the automatic movement unit against a direction of travel (Rᵥ) of the 3D print head (10) such that an extrusion angle greater than 90° is set and that at least one radially inwardly projecting tear-off edge is provided in the extrusion channel (11) such that this interacts with the material mixture at a set extrusion angle greater than 90° to tear off the fiber material of the material mixture in a controlled manner.

2. System (1) according to claim 1, **characterized in that** the 3D print head (10) has a temperature control device which is designed to control the temperature of the matrix material supplied to the 3D print head (10).

3. System (1) according to claim 1 or 2, **characterized in that** the second material feed has two, three or more feed channels which are arranged around an axial course of the feed channel of the first material feed and open into the mixing chamber.

4. System (1) according to one of claims 1 to 3, **characterized in that** the extrusion channel (11) of the 3D print head (10) has an arcuate course counter to the direction of travel (Rᵥ) of the 3D print head (10).

5. System (1) according to one of claims 1 to 3, **characterized in that** the first material feed has a feed channel which opens into the mixing chamber of the 3D print head (10) and is arranged axially to the extrusion channel (11) and the extrusion opening (12) in such a way, that the quasi-endless fiber material can be fed from the feed channel of the first material feed through the mixing chamber into the extrusion channel (11) and the extrusion opening (12), wherein during the extrusion of the material mixture the axial course of the extrusion channel (11) corresponds to an angle of less than 90° in the direction of travel (Rᵥ) of the 3D print head (10).

6. System (1) according to one of the preceding claims, **characterized in that** the control unit is set up to rotate the 3D print head (10) about its own axis at a set extrusion angle greater than 90°.

7. A method of manufacturing three-dimensional structures comprising two or more different materials, comprising the steps of:
providing a plant (1) for producing a three-dimensional structure according to one of the preceding claims;
- feeding quasi-endless fiber material and matrix material to the 3D print head (10) of the equipment (1); and
- extruding the material mixture formed by the 3D print head (10) to form the three-dimensional structure;
whereby
- during extrusion of the material mixture by the 3D print head (10), an extrusion angle between the extrusion direction in the extrusion channel (11) of the 3D print head (10) and the substrate plane of less than 90° in the direction of travel (Rᵥ) of the 3D print head (10) is set, and
- wherein, at the end of a partial structure (20) of the three-dimensional structure formed by the extrusion of the material mixture, the 3D print head (10) is inclined by means of the automatic movement device counter to the direction of travel (Rᵥ) of the 3D print head (10) in such a way that an extrusion angle greater than 90° is set, which leads to a tearing off of the fiber material.

8. The method according to claim 7, wherein the extrusion angle is varied during extrusion of the material mixture.

9. Method according to claim 7 or 8, wherein the 3D print head (10) is rotated about its own axis at an extrusion angle greater than 90°.

10. Method according to any one of claims 7 to 9, wherein the material mixture interacts at an extrusion angle greater than 90° with at least one tear-off edge projecting radially inwards in the extrusion channel (11) for controlled tear-off of the fiber material of the material mixture.

## Revendications

1. Installation (1) de fabrication de structures tridimensionnelles qui contiennent deux ou plusieurs matériaux différents, comprenant une tête d'impression 3D (10) qui comprend une première alimentation en matériau pour l'alimentation en un matériau fibreux quasiment sans fin et au moins une deuxième alimentation en matériau pour l'alimentation en un matériau de matrice, qui débouchent dans une chambre de mélange commune de la tête d'impression 3D (10), la chambre de mélange étant conçue pour former un mélange de matériaux à partir du matériau fibreux et du matériau de matrice, et un canal d'extrusion s'étendant depuis la chambre de mélange en direction d'une ouverture d'extrusion (12), à travers lequel le mélange de matériaux est transporté dans une direction d'extrusion depuis la chambre de mélange vers l'ouverture d'extrusion (12), afin de délivrer le mélange de matériaux à partir de l'ouverture d'extrusion (12) pour fabriquer la structure tridimensionnelle, et comprenant un automate de déplacement sur lequel la tête d'impression 3D (10) est disposée comme effecteur terminal et qui est conçu pour déplacer la tête d'impression 3D (10) dans une direction de déplacement (R_{V}),
dans laquelle
l'installation (1) est conçue de telle sorte que, pendant l'extrusion du mélange de matériaux par la tête d'impression 3D (10), un angle d'extrusion entre la direction d'extrusion dans le canal d'extrusion de la tête d'impression 3D (10) et le plan du substrat est réglé et/ou réglable, qui est inférieur à 90° dans la direction de déplacement (R_{V}) de la tête d'impression 3D (10),
l'installation (1) comporte une unité de commande de l'automate de déplacement pour commander le déplacement de la tête d'impression 3D (10) pendant la fabrication de la structure tridimensionnelle,
**caractérisée en ce que**
l'unité de commande est conçue pour, à l'extrémité d'une structure partielle (20) de la structure tridimensionnelle formée par l'extrusion d'un mélange de matériaux, incliner la tête d'impression 3D (10) au moyen de l'automate de déplacement en sens opposé à une direction de déplacement (R_{V}) de la tête d'impression 3D (10), de manière à régler un angle d'extrusion supérieur à 90°, et
**en ce qu'**il est prévu dans le canal d'extrusion (11) au moins un bord d'arrachage faisant saillie radialement vers l'intérieur, de telle sorte que celui-ci coopère avec le mélange de matériaux pour l'arrachage contrôlé du matériau fibreux du mélange de matériaux, l'angle d'extrusion réglé étant supérieur à 90°.

2. Installation (1) selon la revendication 1,
**caractérisée en ce que** la tête d'impression 3D (10) comprend un dispositif de régulation de température qui est conçu pour réguler la température du matériau de matrice amené à la tête d'impression 3D (10).

3. Installation (1) selon la revendication 1 ou 2,
**caractérisée en ce que** la deuxième alimentation en matériau comporte deux ou trois canaux d'alimentation ou plus, qui sont disposés autour d'un tracé axial du canal d'alimentation de la première alimentation en matériau et qui débouchent dans la chambre de mélange.

4. Installation (1) selon l'une des revendications 1 à 3,
**caractérisée en ce que** le canal d'extrusion (11) de la tête d'impression 3D (10) présente un tracé en forme d'arc dans le sens opposé à la direction de déplacement (R_{V}) de la tête d'impression 3D (10).

5. Installation (1) selon l'une des revendications 1 à 3,
**caractérisée en ce que** la première alimentation en matériau comprend un canal d'alimentation qui débouche dans la chambre de mélange de la tête d'impression 3D (10) et qui est disposé axialement par rapport au canal d'extrusion (11) et à l'ouverture d'extrusion (12), de telle sorte que le matériau fibreux quasiment sans fin peut être guidé depuis le canal d'alimentation de la première alimentation en matériau à travers la chambre de mélange jusque dans le canal d'extrusion (11) et l'ouverture d'extrusion (12), le tracé axial du canal d'extrusion (11) dans la direction de déplacement (R_{V}) de la tête d'impression 3D (10) correspondant à un angle inférieur à 90° pendant l'extrusion du mélange de matériaux.

6. Installation (1) selon l'une des revendications précédentes,
**caractérisée en ce que** l'unité de commande est conçue pour faire tourner la tête d'impression 3D (10) autour de son propre axe, l'angle d'extrusion réglé étant supérieur à 90°.

7. Procédé de fabrication de structures tridimensionnelles contenant deux ou plusieurs matériaux différents, comprenant les étapes consistant à :
- fournir une installation (1) de fabrication d'une structure tridimensionnelle selon l'une des revendications précédentes ;
- alimenter la tête d'impression 3D (10) de l'installation (1) en matériau fibreux quasiment sans fin et en matériau de matrice ; et
- extruder le mélange de matériaux, formé par la tête d'impression 3D (10), pour former la structure tridimensionnelle ;
dans lequel
- pendant l'extrusion du mélange de matériaux par la tête d'impression 3D (10), un angle d'extrusion entre la direction d'extrusion dans le canal d'extrusion (11) de la tête d'impression 3D (10) et le plan du substrat est réglé, qui est inférieur à 90° dans la direction de déplacement (R_{V}) de la tête d'impression 3D (10),
et
à l'extrémité d'une structure partielle (20) de la structure tridimensionnelle formée par l'extrusion du mélange de matériaux, la tête d'impression 3D (10) est inclinée au moyen de l'automate de déplacement en sens opposé à la direction de déplacement (R_{V}) de la tête d'impression 3D (10), de telle sorte qu'un angle d'extrusion supérieur à 90° est réglé, qui mène à un arrachage du matériau fibreux.

8. Procédé selon la revendication 7,
dans lequel l'angle d'extrusion est varié pendant l'extrusion du mélange de matériaux.

9. Procédé selon la revendication 7 ou 8,
dans lequel, pour un angle d'extrusion supérieur à 90°, la tête d'impression 3D (10) est tournée autour de son propre axe.

10. Procédé selon l'une des revendications 7 à 9,
dans lequel, pour un angle d'extrusion supérieur à 90°, le mélange de matériaux coopère avec au moins un bord d'arrachage faisant saillie radialement vers l'intérieur dans le canal d'extrusion (11) pour l'arrachage contrôlé du matériau fibreux du mélange de matériaux.
